**Europäisches Patentamt**

**European Patent Office**

**Office européen des brevets**

(11) Veröffentlichungsnummer: **0 175 262**
**B1**

(12) **EUROPÄISCHE PATENTSCHRIFT**

(45) Veröffentlichungstag der Patentschrift:
**25.01.89**

(21) Anmeldenummer: **85111441.3**

(22) Anmeldetag: **10.09.85**

(51) Int. Cl.⁴: **B 60 S 3/04**

(54) Hochdruckreinigungsgerät.

(30) Priorität: **10.09.84 DE 3433225**

(43) Veröffentlichungstag der Anmeldung:
**26.03.86 Patentblatt 86/13**

(45) Bekanntmachung des Hinweises auf die Patenterteilung:
**25.01.89 Patentblatt 89/4**

(84) Benannte Vertragsstaaten:
**AT BE DE FR GB LU NL**

(56) Entgegenhaltungen:
**FR-A-1 239 148**
**GB-A-1 127 061**
**US-A-3 893 591**
**US-A-4 290 442**

(73) Patentinhaber: **Alfred Kärcher GmbH & Co., Alfred-Kärcher- Strasse 30- 40, D-7057 Winnenden (DE)**

(72) Erfinder: **Hirzel, Walter, Mainhardter Strasse 3, D-7150 Backnang (DE)**
Erfinder: **Pachur, Hans- Jürgen, Dipl.- Ing., Buchenhain 10, D-7057 Winnenden 3 (DE)**

(74) Vertreter: **Hoeger, Stellrecht & Partner, Uhlandstrasse 14c, D-7000 Stuttgart 1 (DE)**

EP 0 175 262 B1

## Beschreibung

Die Erfindung betrifft ein Hochdruckreinigungsgerät mit einer Hochdruckpumpe, einer mit einem Wasservorrat verbundenen Wasseransaugleitung und mindestens zwei Chemikalienansaugleitungen, wobei die Chemikalienansaugleitungen und die Wasseransaugleitung über verschließbare Ventile wahlweise mit der Saugseite der Hochdruckpumpe verbindbar sind, und mit einem Ventilgehäuse, dessen Innenraum mit der Saugseite der Hochdruckpumpe verbunden ist und in den die Chemikalienansaugleitungen und die mit dem Wasservorrat verbundene Saugleitung einmünden.

Derartige Hochdruckreinigungsgeräte werden beispielsweise bei Kraftfahrzeugreinigungsanlagen eingesetzt und dienen dazu, wahlweise klares Spülwasser, Shampoo, Konservierungsmittel oder andere Chemikalien aufzutragen, beispielsweise Glanztrockner.

Beim Wechsel von einer Chemikalie auf die andere ergab sich bei bekannten Geräten dieser Art (US-A-3 893 591) die Schwierigkeit, daß nach Umschalten auf eine andere Chemikalie noch der gesamte stromabwärts der Ventile gelegene Raum von der vorher versprühten Chemikalie gereinigt werden mußte, d.h. beim Umschalten auf eine andere Chemikalie gab das Gerät zunächst über einen längeren Zeitraum noch die vorher versprühte Chemikalie ab. Die gewünschte Chemikalie konnte daher nicht sofort auf die Fläche aufgesprüht werden, sondern es erfolgte ein unerwünschter Auftrag mit einer anderen Chemikalie.

Es ist Aufgabe der Erfindung, ein Hochdruckreinigungsgerät der gattungsgemäßen Art derart zu verbessern, daß nach dem Umschalten auf eine andere Chemikalie diese sofort verspritzt werden kann, ohne daß zunächst noch eine begrenzte Menge der vorher versprühten Chemikalie abgegeben wird.

Diese Aufgabe wird bei einem Hochdruckreinigungsgerät der eingangs beschriebenen Art erfindungsgemäß dadurch gelöst, daß der Innenraum als Sacklochbohrung ausgestaltet ist, längs welcher sich die Einmündungen der Chemikalien- und Wasseransaugleitungen erstrecken, wobei die Einmündung der Wasseransaugleitung am weitesten von dem mit der Saugseite der Hochdruckpumpe verbundenen Ende der Sacklochbohrung gelegen ist.

Durch die Verbindung der Sacklochbohrung mit der mit dem Wasservorrat verbundenen Wasseransaugleitung, die von allen Leitungen am weitesten stromaufwärts in die Sacklochbohrung einmündet, kann durch Öffnen des Ventils der Wassersaugleitung Spülwasser die Sacklochbohrung durchströmen und dabei den letzten Rest der vorher versprühten Chemikalie aus der Sacklochbohrung entfernen. Wenn man nach einer solchen Spülung, die beispielsweise nach dem Shampoonieren ohnehin vorgenommen wird, das Ventil der zunächst gewünschten Chemikalie öffnet, kann diese ohne Vermischung mit einer vorher versprühten Chemikalie abgegeben werden.

Besonders vorteilhaft ist es, wenn das Ventilgehäuse ein Ventilblock ist, und wenn in die Sacklochbohrung von den Seitenwänden her kurze Bohrungen einmünden. Die Sacklochbohrung bildet dabei den Innenraum des Ventilgehäuses, und die Verwendung kurzer Bohrungen führt zu kleinvolumigen Toträumen.

Es kann dabei vorgesehen sein, daß die kurze Bohrung am Boden einer größeren Bohrung beginnt, daß in der großen Bohrung ein Magnetventil eingesetzt ist, das einen gegen den Boden der Bohrung anpreßbaren und von ihm abhebbaren Ventilkörper aufweist, und daß in die großen Bohrungen die Wasseransaugleitung bzw. die Chemikalienansaugleitungen so einmünden, daß bei vom Boden abgehobenem Ventilkörper eine Verbindung dieser Leitung zu der kurzen Bohrung besteht. Es ergibt sich dabei eine besonders kleinbauende und kompakte Baueinheit mit geringem Totraumvolumen, bei der die nach dem Schließen der Ventile verbleibenden und auszuspülenden Chemikalienmengen besonders gering sind.

Günstig ist es, wenn im Boden der großen Bohrung eine die kurze Bohrung konzentrisch umgebende Ringnut eingelassen ist und der Ventilkörper komplementär zur Kontur des Bodens ausgebildet ist. Dadurch ergibt sich eine vorteilhafte Abdichtung im Bereich des Bodens der großen Bohrung. Vorzugsweise erweitert sich die der kurzen Bohrung benachbarte Seitenwand der Ringnut zum Boden der Ringnut hin konisch, so daß der Ventilkörper beim Schließen zentriert wird.

Es ist vorteilhaft, wenn alle Chemikalienansaugleitungen und die Wassersanaugleitung von der Unter- oder Oberseite des Gehäuses in dieses einmünden. Auch dadurch ergibt sich ein besonders kompakter Aufbau, da alle Zuflußanschlüsse zum Gehäuse dann entweder auf der Oberseite oder auf der Unterseite des Gehäuses zusammengefaßt werden können.

Vorzugsweise beginnt die Sacklochbohrung im Einmündungsbereich der Saugleitung. Dadurch ergeben sich an dem der Pumpe abgewandten Ende der Sacklochbohrung keine vom Spülwasser nichtdurchflossenen Toträume.

Besonders vorteihaft ist es, wenn die Chemikalienansaugleitungen und/oder die Wasseransaugleitung paarweise einander gegenüberliegend in den Innenraum einmünden. Die Magnetventile können vorzugsweise seitlich aus dem Gehäuse hervor stehen.

Es ist günstig, wenn der Boden der großen Bohrungen bzw. der Boden der Ringnut im Boden der großen Bohrung von der Längsbohrung nur durch einen schmalen Steg getrennt ist. Es ergibt sich dann eine besonders geringe Länge der kurzen Bohrung, so daß auch durch diese Maßnahme die Toträume gering gehalten werden können.

Die nachfolgende Beschreibung einer bevorzugten Ausführungsform der Erfindung dient im Zusammenhang mit den Zeichnunen der näheren Erläuterung. Es zeigen:

Fig. 1 eine Seitenansicht eines teilweise aufgebrochen dargestellten Ventilblocks nach Abnahme der Magnetventile;

Fig. 2 eine Schnittansicht längs Linie 2 - 2 mit eingesetzten Magnetventilen und

Fig. 3 eine schematische Darstellung der Verwendung eines erfindungsgemäßen Ventilblockes in einem Hochdruckreinigungsgerät mit Chemikalienversprühung.

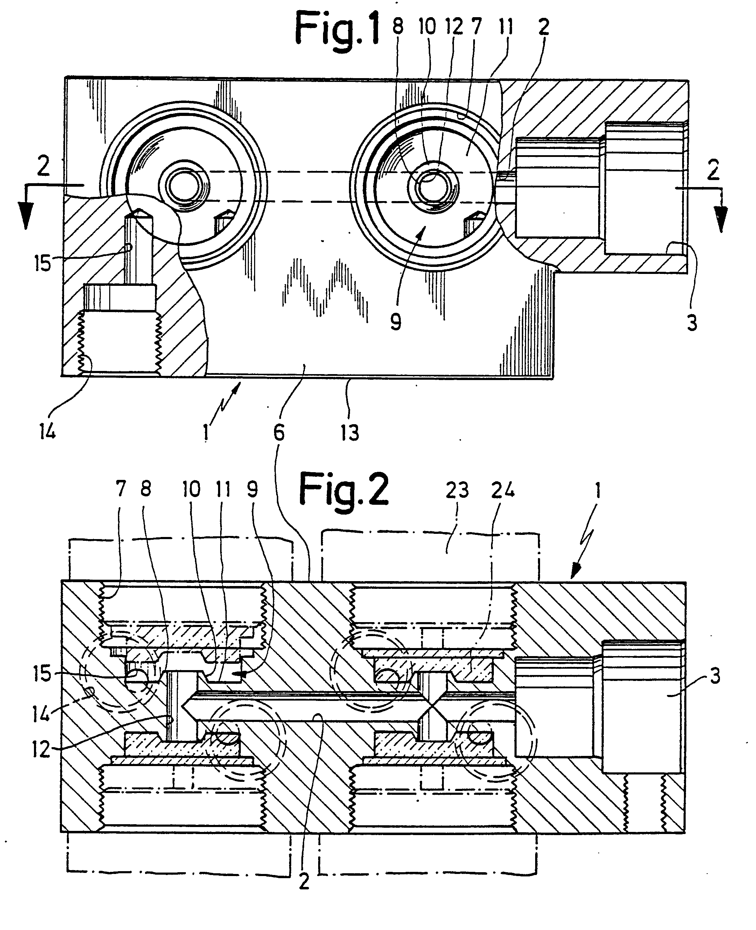

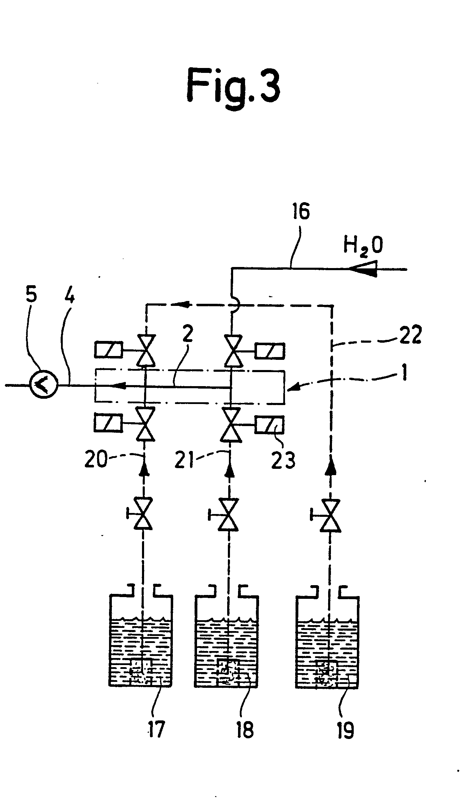

Das in der Zeichnung dargestellte Ventilgehäuse umfaßt einen quaderförmigen Ventilblock 1 mit einer in Längsrichtung verlaufenden Sacklochbohrung 2, die an einer Seite in eine stufenförmig erweiterte Anschlußbohrung 3 übergeht. In ein Innengewinde dieser Anschlußbohrung 3 kann eine in den Figuren 1 und 2 nicht dargestellte Verbindungsleitung 4 zur Saugseite einer Hochdruckpumpe 5 führen (Figur 3).

In die Seitenwände 6 des Ventilblockes 1 sind paarweise gegenüberliegend je zwei größere Innengewindebohrungen 7 eingearbeitet, in deren Boden 8 eine Ringnut 9 eingelassen ist, deren innere Seitenwand 10 sich zum Boden 11' der Ringnut 9 hin konisch erweitert. Die beiden Innengewindebohrungen 7 sind durch eine konzentrisch zu ihnen angebrachte Durchgangsbohrung 12 miteinander verbunden, deren Durchmesser so gering gewählt ist, daß sie innerhalb der Ringnut 9 in die Innengewindebohrungen 7 einmündet. Die Durchgangsbohrungen 12 befinden sich dabei auf derselben Höhe wie die Sacklochbohrung 2 und durchsetzen diese, wobei eine Durchgangsbohrung 12 im Bereich des Endes der Sacklochbohrung 2 angeordnet ist, die andere zwischen dieser und der Anschlußbohrung 3.

In die Unterseite 13 sind, vier Innengewindebohrungen 14 eingearbeitet, an die sich jeweils eine Bohrung 15 anschließt. Jede dieser Bohrungen 15 mündet im Bereich einer Ringnut 9 der Innengewindebohrung 7. In jede Innengewindebohrung 14 ist eine in den Figuren 1 und 2 nicht dargestellte Zufuhrleitung eingeschraubt. In eine der beiden Innengewindebohrungen 14, die der stromaufwärts im Bereich des Endes der Sacklochbohrung 2 gelegenen Durchgangsbohrung 12 zugeordnet ist, mündet eine von einem Spülwasservorrat kommende Saugleitung 16 ein, in die anderen drei Innengewindebohrungen mit jeweils verschiedenen Chemikalienbehältern 17, 18 bzw. 19 verbundene Chemikalienleitungen 20, 21, 22 (Figur 3).

In jede Innengewindebohrung 7 ist ein Magnetventil 23 eingeschraubt; diese sind in Figur 1 gar nicht und in Figur 2 teilweise mit strichpunktierten Linien dargestellt. Jedes Magnetventil 23 weist einen in die Innengewindebohrung 7 eintauchenden Ventilkörper 24 auf, der an seiner von dem Magnetventil abgewandten Seite komplementär zur Kontur des Bodens der Innengewindebohrung 7 ausgebildet ist. Bei geschlossenem Magnetventil liegt der Ventilkörper 24 flächig am Boden der Innengewindebohrung 7 an und verschließt die in die Innengewindebohrung einmündende Durchgangsbohrung. Dies ist bei dem Ausführungsbeispiel der Figur 2 bei den beiden unteren und bei der rechts oben angeordneten Innenbohrung der Fall. Bei der links oben angeordneten Innenbohrung dagegen ist der Ventilkörper 24 vom Boden der Innengewindebohrung 7 abgehoben, so daß eine Durchgangsverbindung zwischen der in die Ringnut 9 dieser Innengewindebohrung 7 einmündenden Bohrung 15 und der Durchgangsbohrung 12 besteht, die ihrerseits Verbindung mit der Sacklochbohrung 2 hat. Auf diese Weise kann auf diesem Strömungsweg Flüssigkeit zur Saugseite der Hochdruckpumpe gefördert werden, während die anderen Zuleitungen abgesperrt sind.

Es ist dabei von Bedeutung, daß eine der biden Innengewidebohrungen 7, die dem stromaufwärts (d.h. von der Sacklochbohrung 2, gelegenen Ende der Sacklochbohrung 2 zugeordnet sind, mit der Spülwasserleitung verbunden ist. Fließt Spülwasser durch diese Leitung zur Pumpe, werden die Sacklochbohrung 2 und auch die in sie einmündenden kurzen Teile der Durchgangsbohrungen 12 gespült und von darin verbleibender Chemikalie gereinigt, so daß nach jedem Spülvorgang die Sacklochbohrung 2 mit den in sie einmündenden Durchgangsbohrungen chemikalienfrei ist. Schließt man nach einem solchen Spülvorgang das der wasserzuführenden Saugleitung zugeordnete Ventil und öffnet ein einer Chemikalienleitung zugeordnetes Ventil, kann sofort Chemikalie der Hochdruckpumpe zufließen, die nicht mit einer früher abgegebenen Chemikalie vermischt ist.

Selbst wenn man ohne Wasserzwischenspülung von einer Chemikalie auf die andere umschaltet, ergeben sich nur geringe Chemikalienbeimischung der vorher versprühten Chemikalie, da durch die räumliche Nähe der Ventile im Ventilblock und durch die kurzen Wege der Bohrungen nur kleine Toträume entstehen, die bereits nach kürzester Zeit vollständig von der vorher versprühten Chemikalie gereinigt sind.

Wenn der Betreiber jedoch Wert darauf legt, eine Chemikalie ohne jede Beimischung einer anderen Chemikalie zu versprühen, genügt es nach jedem. Versprühen einer Chemikalie, kurz reines Spülwasser zu versprühen, da auf diese Weise in kürzester Zeit der gesamte Ventilblock chemikalienfrei gemacht werden kann.

Der Ventilblock mit den eingeschraubten Magnetventilen stellt ehe kompakte Baueinheit dar, die auch den Einbau in einem Hochdruckreiniger erheblich erleichtert, da es genügt, an diese Baueinheit die vier Zufuhrleitungen und die zur Hochdruckpumpe führende Leitung sowie Steuerleitungen für die Magnetventile anzuschließen. Es ist nicht mehr nötig, Einzelventile in komplizierter Weise einzusetzen.

**Patentansprüche**

1. Hochdruckreinigungsgerät mit einer Hochdruckpumpe (5), einer mit einem Wasservorrat verbundenen Wasseransaugleitung (16) und mindestens zwei Chemikalienansaugleitungen (20, 21, 22), wobei die Chemikalienansaugleitungen (20, 21, 22) und die Wasseransaugleitung (16) über verschließbare Ventile (23) wahlweise mit der Saugseite der Hochdruckpumpe (5) verbindbar sind, und mit einem Ventilgehäuse (1), dessen Innenraum (2) mit der Saugseite der Hochdruckpumpe (5) verbunden ist und in den die Chemikalienansaugleitungen (20, 21, 22) und die mit dem Wasservorrat verbundene Saugleitung (16) einmünden, dadurch gekennzeichnet, daß der Innenraum als Sacklochbohrung (2) ausgestaltet ist, längs welcher sich die Einmündungen der Chemikalien- und Wasseransaugleitungen (20, 21, 22 bzw. 16) erstrecken, wobei die Einmündung der Wasseransaugleitung (16) am weitesten von dem mit der Saugseite der Hochdruckpumpe (5) verbundenen Ende der Sacklochbohrung (2) gelegen ist.

2. Hochdruckreinigungsgerät nach Anspruch 1, dadurch gekennzeichnet, daß das Ventilgehäuse ein Ventilblock (1) ist und daß in die Sacklochbohrung (2) von den Seitenwänden (6) her kurze Bohrungen (12) einmünden.

3. Hochdruckreinigungsgsgerät nach Anspruch 2, dadurch gekennzeichnet, daß die kurze Bohrung (12) am Boden (8) einer größeren Bohrung (7) beginnt, daß in die große Bohrung (7) ein Magnetventil (23) eingesetzt ist, das einen gegen den Boden (8) der Bohrung (7) anpreßbaren und von ihm abhebbaren Ventilkörper (24) aufweist, und daß in die großen Bohrungen (7) die Wasseransaugleitung (16) bzw. die Chemikalienansaugleitungen (20, 21, 22) so einmünden, daß bei vom Boden (8) abgehobenem Ventilkörper (24) eine Verbindung dieser Leitungen zu der kurzen Bohrung (12) besteht.

4. Hochdruckreinigungsgerät nach Anspruch 3, dadurch gekennzeichnet, daß im Boden (8) der großen Bohrung (7) eine die kurze Bohrung (12) konzentrisch umgebende Ringnut (9) eingelassen ist und der Ventilkörper (24) komplementär zur Kontur des Bodens (8) ausgebildet ist.

5. Hochdruckreinigungsgerät nach Anspruch 4, dadurch gekennzeichnet, daß die der kurzen Bohrung (12) benachbarte Seitenwand (10) der Ringnut (9) sich zum Boden (11) der Ringnut (9) hin konisch erweitert

6. Hochdruckreinigungsgerät nach einem der Ansprüche 3, 4 oder 5, dadurch gekennzeichnet, daß alle Chemikalienansaugleitungen (20, 21, 22) und die Wasseransaugleitung (16) von der Unterseite (13) oder der Oberseite des Gehäuses (1) in dieses einmünden.

7. Hochdruckreinigungsgerät nach einem der Ansprüche 2 bis dadurch gekennzeichnet, daß die Sacklochbohrung (2) im Einmündungsbereich der Wasseransaugleitung (16) beginnt.

8. Hochdruckreinigungsgerät nach einem der voranstehenden Ansprüche, dadurch gekennzeichnet, daß die Chemikalienansaugleitungen (20, 21, 22) und/ oder Wasseransaugleitung (16) paarweise einander gegenüberliegend in die Sacklochbohrung (2) einmünden.

9. Hochdruckreinigungsgerät nach einem der Ansprüche 3 bis 8, dadurch gekennzeichnet, daß die Magnetventile (23) seitlich aus dem Gehäuse (1) hervorstehen.

10. Hochdruckreinigungsgerät nach einem der Ansprüche 3 bis 9, dadurch gekennzeichnet, daß der Boden (8) der großen Bohrungen (7) bzw. der Boden (11) der Ringnut (9) im Boden (8) der großen Bohrung (7) von der Sacklochbohrung (2) nur durch einen schmalen Steg getrennt ist.

**Claims**

1. High pressure cleaning apparatus having a high pressure pump (5), a water suction intake line (16) connected to a water supply, and at least two chemical suction intake lines (20, 21, 22), whereby the chemical suction intake lines (20, 21, 22) and the water suction intake line (16) are selectively connectible to the auction side of the high pressure pump (5) via closable valves (23), and having a valve housing (1) whereof the interior (2) is connected to the auction side of the high pressure pump (5) and into which open the chemical suction intake lines (20, 21, 22) and the auction line (16) connected to the water supply, characterised in that the interior is constructed as a blind bore (2) along which extend the openings of the chemical and water suction intake lines (20, 21, 22 and 16 respectively), whereby the opening of the water suction intake line (16) is located furthest from the end of the blind bore (2) connected to the suction side of the high pressure pump (5).

2. High pressure cleaning apparatus according to claim 1, characterized in that the valve housing is a valve block (1) and in that short bores (12) open into the blind bore (2) from the side walls (6).

3. High pressure cleaning apparatus according to claim 2, characterised in that the short bore (12) begins at the base (8) of a larger bore (7), in that a solenoid valve (23) having a valve body (24) which can be pressed against and raised away from the base (8) of the bore (7) is placed in the large bore (7), and in that the water suction intake line (16) or the chemical suction intake lines (20, 21, 22) open into the large bores (7) such that there is a connection of these lines to the short bore (12) when the valve body (24) is raised away from the base (8).

4. High pressure cleaning apparatus according to Claim 3, characterised in that an annular groove (9) concentrically surrounding the short bore (12) is let into the base (8) of the large bore (7) and the valve body (24) is adapted to be complementary to the contour of the base (8).

5. High pressure cleaning apparatus according to Claim 4, characterised in that the side wall (10) of the annular groove (9) adjacent to the short bore (12) widens conically towards the base (11) of the annular groove (9).

6. High pressure cleaning apparatus according to one of Claims 3, 4 or 5, characterised in that all the chemical suction intake lines (20, 21, 22) and the water suction intake line (16) open from the lower side (13) or tits upper side of the housing (1) into the latter.

7. High pressure cleaning apparatus according to one of Claims 2 to 6, characterised in that the blind bore (2) begins in the opening region of the water auction intake line (16).

8. High pressure cloaning apparatus according to one of the preceding claims, characterised in that the chemical suction intake lines (20, 21, 22) and/or the water suction intake line (16) open into the blind bore (2) in pairs opposite one another.

9. High pressure cloaning apparatus according to one of Claims 3 to 8, characterised in that the solenoid valves (23) project laterally from the housing (1).

10. High pressure cleaning apparatus according to one of Claims 3 to 9, characterised in that the base (8) of the large bores (7) or the base (11) of the annular groove (9) in the base (8) of the large bore (7) is separated from the blind bore (2) only by a narrow web.

**Revendications**

1. Appareil de nettoyage à haute pression comprenant une pompe à haute pression (5), une conduite d'aspiration d'eau (16) reliée à une réserve d'eau et au moins deux conduites d'aspiration de produits chimiques (20, 21, 22), les conduites d'aspiration de produits chimiques (20, 21, 22) et la conduite d'aspiration d'eau (16) pouvant être reliées sélectivement au côté aspiration de la pompe à haute pression par des vannes obturables (23), et un boîtier de vannes (1) dont la cavité intérieure est reliée au côté aspiration de la pompe à haute pression (5) et dans lequel débouchent les conduites d'aspiration de produits chimiques (20, 21, 22) et la conduite d'aspiration (16) reliée à la réserve d'eau, caractérisé en ce que la cavité intérieure est constituée par un perçage borgne (2) le long duquel se trouvent les orifices de débouché des conduites d'aspiration de produits chimiques et d'aspiration d'eau (20, 21, 22 et 16 respectivement), l'orifice de débouché de la conduite d'aspiration d'eau étant le plus éloigné de l'extrémité du perçage borgne (2) qui est reliée au côté aspiration de la pompe à haute pression (5).

2. Appareil de nettoyage à haute pression selon la revendication 1, caractérisé en ce que le boîtier de vannes est constitué par un bloc de distribution (1) et en ce que des perçages courts (12) débouchent dans le perçage borgne (2) en partant des parois latérales (6).

3. Appareil de nettoyage à haute pression selon la revendication 2, caractérisé en ce que le perçage court (12) prend naissance dans le fond (8) d'un grand perçage (7), en ce que, dans le grand perçage, est montée une électrovanne qui présente un élément obturateur (24) qui peut s'appliquer sur le fond (8) du perçage (7) et s'en soulever et en ce que la conduite d'aspiration d'eau (16) et les conduites d'aspiration de produits chimiques (20, 21, 22) débouchent dans les grands perçages (7) de telle manière que, lorsque l'élément obturateur (24) est soulevé du fond (8), il s'établisse une liaison entre la conduite respective et le perçage court (12) correspondant.

4. Appareil de nettoyage à haute pression selon la revendication 3, caractérisé en ce que, dans le fond (8) du grand perçage (7), est ménagée une rainure annulaire (9) qui entoure concentriquement le perçage court (12), et l'élément obturateur (24) de la vanne est d'une configuration complémentaire du profil du fond (8).

5. Appareil de nettoyage à haute pression selon la revendication 4, caractérisé en ce que la paroi latérale (10) de la rainure annulaire (9) qui est la plus rapprochée du perçage court (12) s'évase avec une forme conique en direction du fond (11) de la rainure annulaire (9).

6. Appareil de nettoyage à haute pression selon une des revendications 3, 4 et 5, caractérisé en ce que toutes les conduites d'aspiration de produits chimiques (20, 21, 22) et la conduite d'aspiration d'eau (16) débouchent dans le boîtier (1), en partant de la face inférieure (I3) ou de la face supérieure de ce boîtier.

7. Appareil de nettoyage à haute pression selon une des revendications 2 à 6, caractérisé en ce que le perçage borgne (2) prend naissance dans la région du débouché de la conduite d'aspiration d'eau (16).

8. Appareil de nettoyage à haute pression selon une des revendications précédentes, caractérisé en ce que les conduites d'aspiration de produits chimiques (20, 21, 22) et/ou la conduite d'aspiration d'eau (16) débouchent dans le perçage borgne (2) en se faisant mutuellement face, par paires.

9. Appareil de nettoyage à haute pression selon une des revendications 3 à 8, caractérisé en ce que les électrovannes (23) font saillie latéralement sur le boîtier (1).

10. Appareil de nettoyage à haute pression selon une des revendications 3 à 9, caractérisé en ce que le fond (8) des grands perçages (7), ou plus précisément, le fond (11) de la rainure annulaire (9) qui est ménagée dans le fond (8) du grand perçage (7), n'est séparé du perçage borgne (2) que par un voile mince.

# Fig.1

# Fig.2

# Fig.3